Europäisches Patentamt

European Patent Office

Office européen des brevets

(19)

(11) EP 0 710 929 A2

(12) EUROPEAN PATENT APPLICATION

(43) Date of publication:
08.05.1996 Bulletin 1996/19

(51) Int Cl.6: G06T 15/70

(21) Application number: 95307884.7

(22) Date of filing: 06.11.1995

(84) Designated Contracting States:
DE FR GB IT NL SE

(30) Priority: 07.11.1994 US 335285

(71) Applicant: AT&T Corp.
New York, NY 10013-2412 (US)

(72) Inventors:
• Chen, Homer H.
Lincroft, New Jersey 07738 (US)

• Chou, Wu
Berkeley Heights, New Jersey 07922 (US)

(74) Representative:
Watts, Christopher Malcolm Kelway, Dr. et al
AT&T (UK) Ltd.
5, Mornington Road
Woodford Green Essex, IG8 0TU (GB)

(54) **Acoustic-assisted image processing**

(57) Acoustic-assisted image processing is achieved, in accordance with the invention by a novel method and apparatus in which an audio signal is sampled at an audio-domain sampling rate; a first viseme sequence is generated at a first rate in response to the sampled audio signal, the first rate corresponding to an audio-domain sampling rate; the first viseme sequence is transformed into a second viseme sequence at second rate using a predetermined set of transformation criteria, the second rate corresponding to a video-domain frame rate; and an image is processed in response to the second viseme sequence. In an illustrative example of the invention, a video image of a face of a human speaker is animated using a three-dimensional wire-frame facial model upon which a surface texture is mapped. The three-dimensional wire-frame facial model is structurally deformed in response to a rate-transformed viseme sequence extracted from a speech signal so that the mouth region of the video image moves in correspondence with the speech. Advantageously, the animation is accomplished in real time, works with any speaker, and has no limitations on vocabulary, nor requires any special action on the part of the speaker.

FIG. 1

EP 0 710 929 A2

# Description

## Technical Field

This invention relates to speech recognition and image animation. More particularly, this invention relates to acoustic-assisted image processing.

## Background of the Invention

Lip reading is an ancient art which has proven valuable as an aid for hearing impaired people in understanding verbal communication. In modern times, the idea of using visual information to assist in understanding verbal communication has been successfully extended as a way of increasing the accuracy of speech recognition by machines. However, there have been no entirely satisfactory applications of the reverse situation, that is, using verbal communication to assist the processing of visual information by machines. More specifically, it would be desirable to use acoustic information, such as speech, to assist in the animation of video images. It would particularly be desirable to be able to do such animation in real time, with any speaker, without limitations on vocabulary, and without requiring any special actions by the speaker.

## Summary of the Invention

Acoustic-assisted image processing is achieved, in accordance with the invention, by a novel method and apparatus in which an audio signal is sampled at an audio-domain sampling rate; a first viseme sequence is generated at a first rate in response to the sampled audio signal, the first rate corresponding to the audio-domain sampling rate; the first viseme sequence is transformed into a second viseme sequence at second rate using a predetermined set of transformation criteria, the second rate corresponding to a video-domain frame rate; and an image is processed in response to the second viseme sequence.

In an illustrative example of the invention, a video image of a face of a human speaker is animated using a three-dimensional wire-frame facial model upon which a surface texture is mapped. The three-dimensional wire-frame facial model is structurally deformed in response to a rate-transformed viseme sequence extracted from a speech signal so that the mouth region of the video image moves in correspondence with the speech. Advantageously, the animation is accomplished in real time, works with any speaker, and has no limitations on vocabulary, nor requires any special action on the part of the speaker.

## Brief Description of the Drawing

FIG. 1 is simplified block diagram of an illustrative example of an acoustic-assisted image processor, in accordance with the invention.

FIG. 2 shows details of the viseme sequence generator shown in FIG. 1.

FIG. 3 is a simplified block diagram showing details of the operation of the viseme acoustic feature extractor shown in FIG. 2

FIG. 4 is a simplified block diagram showing details of the operation of the viseme recognizer shown in FIG. 2.

FIG. 5 shows six feature points used in animating a facial image.

FIG. 6 is a simplified flow chart which shows the operation of the sequence transformer shown in FIG. 1.

FIG. 7 is a simplified block diagram which illustrates a weighted moving average process. in accordance with the invention.

FIG. 8 shows an illustrative example of a 3-D wire frame facial model.

FIGs. 9 and 10 show two exemplary 3-D wire frame models illustrating some principles of the invention.

FIGs. 11 and 12 show the 3-D wire frame images shown in FIGs. 9 and 10 in which a surface texture has been applied.

FIG. 13 shows an illustrative example of a telecommunications system, incorporating an aspect of the invention.

FIG. 14 shows another illustrative example of a telecommunications system, incorporating an aspect of the invention.

## Detailed Description

The present invention discloses a method an apparatus for synthesizing an animated video image using parameters extracted from an audio signal. In a first illustrative example of the invention, the animated facial image of a speaker is synthesized in response to a speech signal. Such an illustrative example of the invention provides a number of advantages, for example, by allowing rapid and accurate machine-generated animation of cartoons or video games. Alignment of an actor's voice with a cartoon character's mouth has been considered to be one of the most challenging and time consuming processes associated with cartoon and video game production since such animation is traditionally done by hand. These and other advantages of the first illustrative example of the invention will become apparent in light of the description that follows.

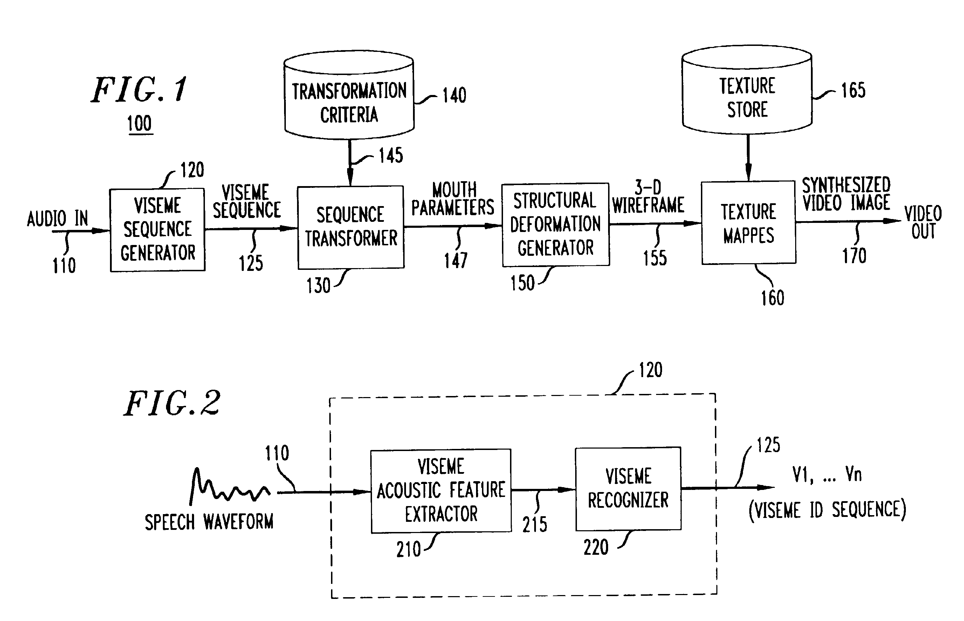

FIG. 1 is a simplified block diagram of an acoustic-assisted image processor 100, in accordance with the invention. Being acoustic-assisted, it will be apparent that image processor 100 operates in both the audio and video-domains. Image processor 100 comprises viseme sequence generator 120, viseme sequence transformer 130, structural deformation generator 150, and texture mapper 160, coupled. as shown, in a serial arrangement. Details as to the operations of each of these components is discussed in turn below. For clarity of exposition the illustrative examples of the present invention are presented as comprising individual functional and operational blocks. The functions and operations that these blocks represent may be provided through the use of either shared or dedicated hardware, including, but not limited to, hardware capable of executing software. For example, the functions of the acoustic-assisted image processor 100 in FIG. 1 may be provided by a single shared processor. It should be noted that the term "processor" should not be construed to refer exclusively to hardware capable of executing software.

As shown in FIG. 1, an audio signal is input to image processor 100 on line 110. The audio signal in this illustrative example is a continuous waveform representing speech. Viseme sequence generator 120 generates a sequence of visemes in response to the audio signal. A viseme is a sequence of oral-facial movements, or mouth shapes, which corresponds to certain articulate linguistic-based units, such as audio phonemes. Visemes are known, being described, for example by K.W. Berger, Speechreading: Principles and Methods, National Education Press, 1972.

The details of viseme sequence generator 120 are shown in FIG. 2. Viseme sequence generator 120 comprises a viseme acoustic feature extractor 210 and viseme recognizer 220 coupled in a serial arrangement. Viseme acoustic feature extractor 210 extracts an acoustic feature vector sequence from the continuous speech signal input on line 110 and outputs the acoustic vector sequence on line 215. Viseme recognizer 220 generates a sequence of visemes from the acoustic feature vector sequence output from viseme acoustic feature extractor 210.

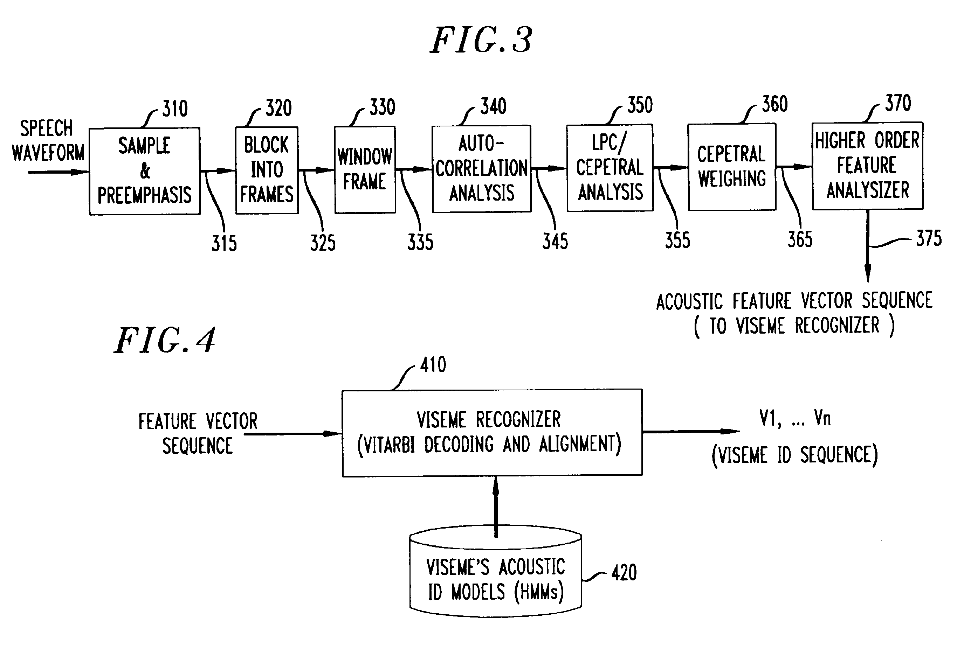

FIG. 3 is a simplified block diagram showing details of the operation of viseme acoustic feature extractor 210 shown in FIG. 2. Referring to FIG. 3, the continuous speech signal is sampled and pre-emphasized in operational block 310, according to:

$$\hat{S}(n) = S(n) - \alpha S(n\text{-}1)$$

where $S(n)$ is the sampled speech signal and $\alpha=0.95$ in this illustrative example. $\hat{S}(n)$, the pre-emphasized sampled speech signal is blocked into frames in operational block 320. A Hamming window is applied in operational block 330, having a 30 msec width and a 10 msec shift. The resulting feature vector sequence is output on line 335 at the audio-domain rate of 100 samples per second. Of course, those skilled in the art will appreciate that other audio-domain sampling rates may just as readily be utilized according to requirements of a particular application of the invention. A 10th order auto-correlation and linear predictive coding ("LPC") cepstral analysis is performed on the feature vector, respectively, in operational blocks 340 and 350. LPC cepstral analysis is known, and is described for example, by C.H. Lee et al.. "Improved Acoustic Modeling for Speaker Independent Large Vocabulary Continuous Speech Recognition," Computer Speech and Language, 103-127, 1992. The output of the LPC analysis on line 355 is cepstral weighted in operational block 360 to form the first order cepstrum feature vector. Higher order cepstral features and energy (i.e, $\Delta,\Delta\Delta$ cepstrums, $\Delta,\Delta\Delta$ energy) are added to the first order cepstrum feature vector in operational block 370. The acoustic feature vector sequence on line 375 is then processed by viseme recognizer 220 (FIG. 2).

Referring to FIG. 4, there is shown a simplified block diagram which illustrates the operation of viseme recognizer 220. In operational block 410, viseme recognizer 220 decodes the acoustic feature vector sequence using, for example, the known Viterbi decoding and alignment scheme, according to viseme identities from store 420. Viseme identities are described, for example, by the known continuous density hidden Markov model ("HMM"). The feature vector sequence can be decoded in a frame-synchronous or asynchronous manner in operational block 410.

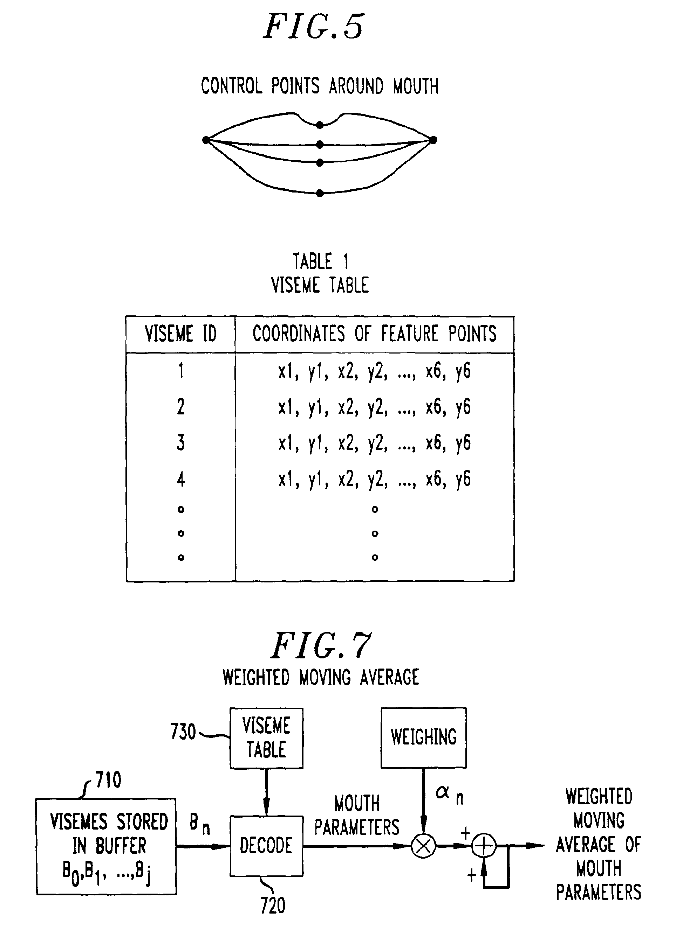

It will be appreciated that visemes correspond to very short acoustic events, often at the sub-phoneme level. Therefore, in accordance with the principles of the invention, a fine temporal resolution is utilized in order to accurately identify visemes from the audio signal. In this illustrative example of the invention, as described above, the viseme acoustic feature extractor 210 outputs a feature vector sequence at the audio-domain sampling rate of 100 samples per second. Viseme sequence generator 120 thus generates a viseme sequence at this rate. By comparison, as will be appreciated by those skilled in the art, the video-domain frame rate is typically only 15 to 30 frames per second. In order to resolve this rate mismatch, sequence transformer 130 (FIG. 1) transforms the high rate audio-domain viseme sequence on line 125 into a low rate video-domain viseme sequence. Sequence transformer 120 carries out this function according to predetermined criteria, which may include, for example, physiological acoustic rules of visemes in the audio-domain, visual perception of visemes in the video-domain, and other knowledge-based criteria. These predetermined transformation criteria could be stored, for example, using a criteria store 140 which is coupled to sequence transformer 130 via line 145, as shown in FIG. 1. In addition to rate transformation, sequence transformer 120 may also perform image smoothing and error correction according to predetermined knowledge-based rules. In response to the low rate video-domain viseme sequence, sequence transformer 130 outputs a sequence of mouth parameters representing a mouth shape on line 147. The mouth parameters are output at the video-domain frame rate. In this illustrative example, the video frame rate is 30 frames per second, thus, mouth parameters are output at a rate of 30 mouth parameters sequences per second. The mouth parameters are stored in a look-up table of mouth parameters. One example of a suitable look-up table is shown in Table 1. Table 1 shows that the mouth parameters include the coordinates of six lip feature points around the mouth which are shown in FIG. 5. Although six lip feature points are utilized in this illustrative example of the invention it, is intended that the scope of the invention include other numbers of feature points. Moreover, those skilled in the art will appreciate that it may be desirable to control other feature points around portions of the face in some applications of the invention. For example, the eyes and head can also be controlled in order to make the final animated image more natural in appearance.

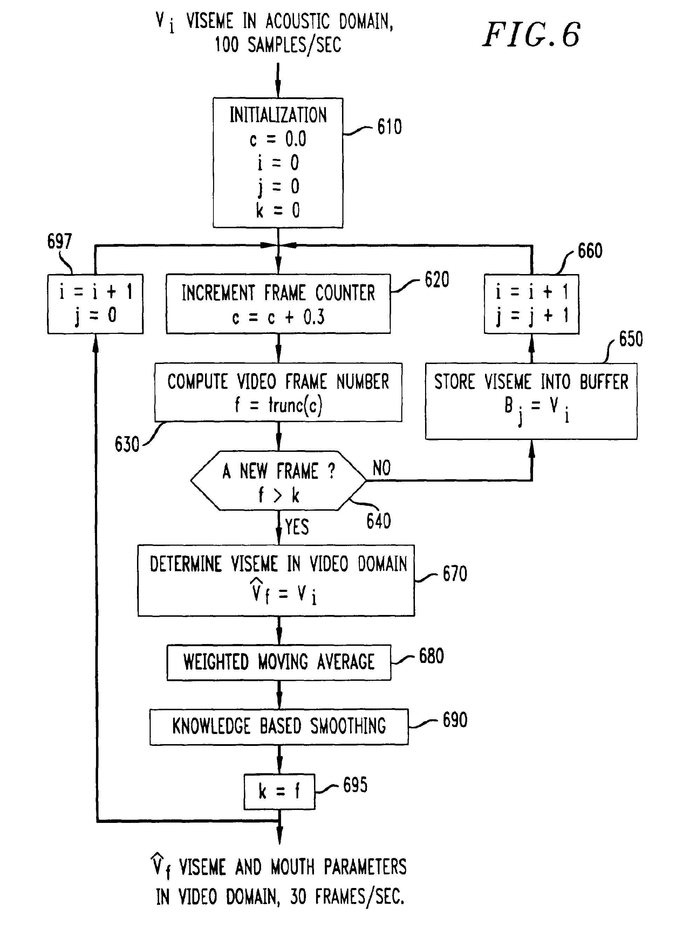

FIG. 6 is a simplified flow chart which shows the operation of the sequence transformer 130 shown in FIG. 1. The transformation from audio-domain to video-domain rates is accomplished, in accordance with the invention, in three steps: rate conversion, weighted moving average, and knowledge-based smoothing. The process is entered on line 610 where visemes, $V_i$, are input at the audio-domain rate of 100 samples per second. At operational block 620, frame counter, $c$, and indices $i$, $j$, and $k$ are initialized to 0. In operational block 620 the frame counter, $c$, is incremented by 0.3 for each viseme processed. The video frame number, $f$, which is the value of $c$ after a truncation operation is performed, is computed in operational block 630. At decision block 640, a new frame is generated when the frame counter $f$ is greater than the index $k$. If $f$ is less than $k$ then the current incoming viseme is stored in a buffer as shown in operational block 650. Visemes are denoted by the index $B_j$ in operational block 650. It will be apparent that the number of visemes stored in the buffer will vary between 3 and 4. The indices $i$ and $j$ are incremented by 1 in operational block 660 and control is passed to operational block 620. In operational block 670, a viseme in the video-domain, $V_f$, is determined by equating it to the incoming audio-domain viseme, $V_i$. A weighted moving average is applied to the video-domain viseme in operational block 680. FIG. 7 is a simplified block diagram which illustrates the weighted moving average process. The visemes $B_0$, $B_1$, ...$B_j$ stored in the buffer 710 are decoded in block 720 using a viseme table 730, for example, Table 1 shown above. A weighted sum is applied to the decoded mouth parameters from block 680 corresponding to the buffered visemes, and a new set of mouth parameters is produced. Returning to FIG. 6, the weighted moving averaged mouth parameters from operational block 680 are subjected to knowledge-based smoothing in operational block 690. This operation is based on the physiological characteristics of a human speaker. For example, human articulation is limited by physical laws, thus, it is impossible for the mouth to move from one extreme position to another instantaneously. In a rapid talking situation, the mouth shapes will move to an intermediate position to prepare for the next transition before the next viseme is processed. Accordingly, the knowledge-based smoothing operation can be based on physiological articulation rules in the audio-domain, and visual perception of the mouth shapes in the video-domain. Additionally, unnatural high frequency movements which may result from spuriously produced visemes in the audio-domain may be filtered out in the smoothing operation. After the knowledge-based smoothing in operational block 690, control is passed to operational block 695 where the index $k$ is equated to the frame number, $f$. The index $j$ is reinitialized to zero, and the index $i$ is incremented by one in operational block 697. Control is passed to operational block 620 and the above-described process is repeated. Advantageously, the mouth parameters are produced by sequence transformer 130 (FIG. 1) in real time. Additionally, it should be evident that since no "training" of acoustic-assisted image processor is required to produce mouth shapes corresponding to the speech signal, the practice of the present invention may advantageously be performed with any speaker, without requiring any special actions by the speaker, and without limitations on vocabulary.

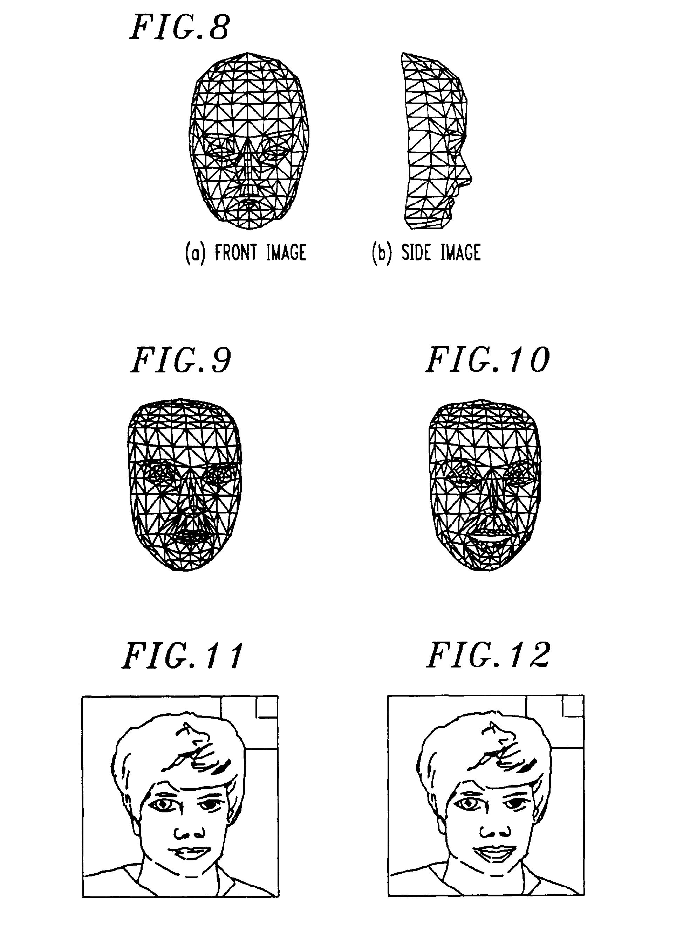

Structural deformation generator 150 (FIG. 1) generates signals for controlling a three-dimensional ("3-D") wire frame facial model in response to the mouth parameters received on line 147. FIG. 8 shows an illustrative example of a 3-D wire frame facial model comprising a lattice of approximately 500 polygonal elements, of which approximately 80 are used for the mouth portion. The 3-D wire frame facial model is manipulated to express facial motions by controlling the lattice points of the wire frame using conventional deformation or morphing methods. One such method is described by K. Aizawa et al., "Model-Based Analysis Synthesis Image Coding (MBASIC) System for a Person's Face." Signal Processing: Image Communications 1, 139-152, 1989. It is unnecessary to control all of the lattice points on the 3-D wire frame 200 independently because motion of one lattice point influences neighboring lattice points. Accordingly, in this illustrative example of the invention, the six lattice points corresponding to the six feature points shown in FIG. 5 are controlled by structural deformation generator 150 using the coordinates contained in the mouth parameters received on line 147. The sequence of mouth parameters received on line 147 thus describes a sequence of mouth movements on the 3-D wire frame facial model. Structural deformation generator 150 operates in the video-domain, which in this illustrative example, is 30 frames per second. Accordingly, a video sequence of 3-D wire frames, where the video sequence describes a wire-frame image having an animated mouth region, is output on line 155 by structural deformation generator 150 at 30 video frames per second. FIGs. 9 and 10 show two exemplary video frames which illustrate this animation.

Texture mapper 160 receives the animated 3-D wire frame image video sequence on line 155. Texture mapper 160 projects or maps a stored surface texture from texture store 165 onto to the 3-D wire frame image in each video frame to create a final synthesized animated video image. Texture mapping is known in the art and is not described in detail herein. FIGs. 11 and 12 show the 3-D wire frame images shown in FIGs. 9 and 10 in which a surface texture has been applied. The animated video images are output at the video-domain frame rate of 30 frames per second on line 170.

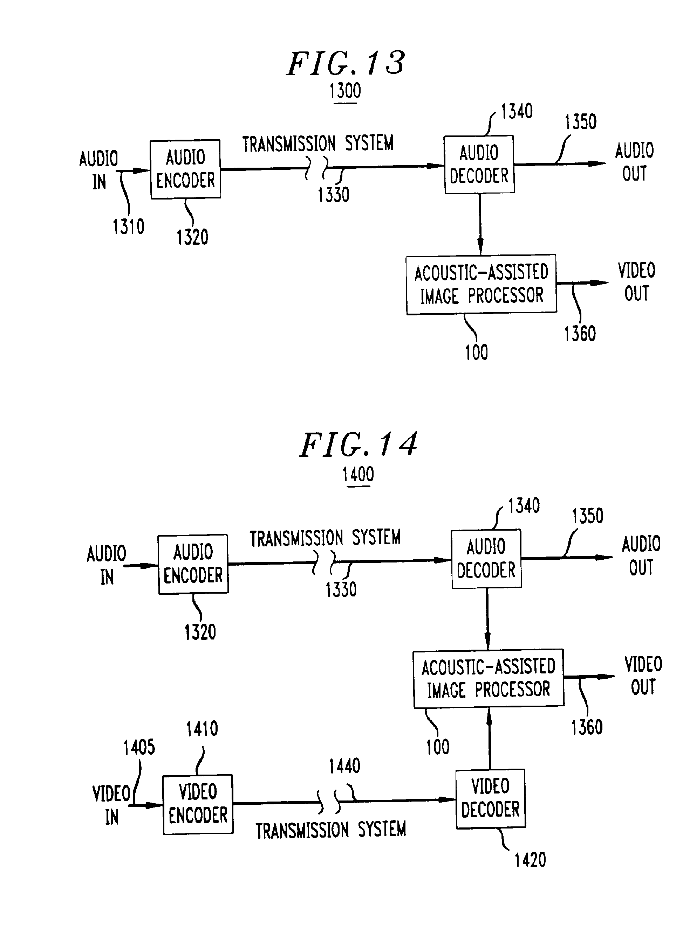

FIG. 13 shows an illustrative example of a telecommunications system 1300, incorporating an aspect of the invention. An audio signal, for example, a speech signal, is input on line 1310 to audio encoder 1320. Audio encoders are known, and are typically used to digitize and/or compress an audio signal into a digital bitstream that utilizes less bandwidth in the telecommunications system. The encoded audio signal is then transmitted over transmission system 1330 to a remote audio decoder 1340. Audio decoders are also known, and are typically used to reconstitute the original audio from the compressed bitstream. Audio decoder outputs the reconstituted original audio signal on line 1350 to some device (not shown) such as a telephone, voice-mail system, and the like. The reconstituted audio signal is also received by the acoustic-assisted image processor 100 shown in FIG. 1 above. Acoustic-assisted image processor outputs a video signal to some video display device such as a monitor, videophone, and the like. Those skilled in the art will appreciate that portions of the acoustic-assisted image processing could also be performed at the transmission side of the telecommunications system 1300. For example, viseme sequence generator 120 (FIG. 1) and viseme sequence transformer 130 (FIG. 1) could be located on the transmitter side and coupled to receive the original audio signal. Mouth parameters would then be transmitted over transmission system 1330 to the structural deformation generator 150 (FIG .1) and texture mapper 160 (FIG. 1) which would be located on the receiver side of telecommunications system 1300. The mouth parameters could be sent via a separate circuit to the receiving side, or be multiplexed with the encoded audio signal.

FIG. 14 shows an illustrative example of a telecommunications system 1400, incorporating an aspect of the invention. This example is similar to the system shown in FIG. 13, however, a video encoder 1410 is included on the transmitter side of the telecommunications system 1400. Video encoder 1410 receives a video signal on line 1405. The video signal on line 1410 could be, for example, the facial image of a speaker. Video encoder encodes the video signal and the encoded video signal is transmitted via transmission system 1440 to a video decoder 1420. Alternatively, the encoded video signal may be transmitted on transmission 1330, using a different circuit, or multiplexed with the encoded audio signal on the same circuit. Video encoders and decoders are known. Video decoder 1420 reconstitutes the original video signal and outputs it to acoustic-assisted image processor 100. Using known techniques such as feature recognition and tracking acoustic-assisted image processor 100 can register the 3-D wire frame facial model to the original facial image. The original facial image is also used as the surface texture for the 3-D wire frame facial model rather than the texture stored in texture store 165 (FIG. 1). The animated video signal is output on bus 1360, as above, to a device such as a video monitor. Acoustic-assisted image processor 100 thus animates an image which appears to be the speaker. Advantageously, such an animation scheme can offer significant transmission bandwidth savings over conventional videophone because, at a minimum, only one frame of video needs to be transmitted to acoustic-assisted image processor 100. This single frame, or "snapshot" can be sent, for example, at the beginning of the audio signal transmission on a separate circuit, or multiplexed with the audio signal. Optionally, additional video frames can be transmitted from video encoder 1410 periodically to refresh the animated image or assist in error correction. Even with the periodic refresh frames, bandwidth savings are significant. This illustrative example of the invention may be desirable as a means to provide visual cues to augment the understanding of the audio signal by hearing-impaired people, for example. Of course, video information may be useful in other contexts as well since it allows for more personalized communication. Speaker identification is also enhanced by the addition of video information which may be advantageous in such applications as credit card authorization, home-shopping, airline and car reservations, and the like.

It will be understood that the particular techniques described above are only illustrative of the principles of the present invention, and that various modifications could be made by those skilled in the art without departing from the scope of the present invention, which is limited only by the claims that follow.

**Claims**

1.   A method, comprising the steps of:

sampling an audio signal at an audio-domain sampling rate;
generating a first viseme sequence in response to said sampled audio signal at a first rate corresponding to said audio-domain sampling rate;
transforming said first viseme sequence into a second viseme sequence at a second rate according to a predetermined set of transformation criteria, said second rate corresponding to a video-domain frame rate; and
processing an image in response to said second viseme sequence.

2.   The method as claimed in claim 1 wherein said audio-domain sampling rate is 100 samples per second.

3.   The method as claimed in claim 1 wherein said video-domain sampling rate is selected from the group consisting of 30 frames per second or 15 frames per second.

4. The method as claimed in claim 1 wherein said transformation criteria include knowledge-based rules.

5. The method as claimed in claim 4 wherein said knowledge-based rules include physiological articulation rules.

6. The method as claimed in claim 1 wherein said transformation criteria include a visual perception of said processed image.

7. The method as claimed in claim 1 wherein said transforming includes applying a weighted moving average to each viseme in said first viseme sequence.

8. The method as claimed in claim 1 wherein said image is a video image.

9. The method as claimed in claim 1 wherein said image includes an image of a facial region of a speaker.

10. The method as claimed in claim 9 wherein said processing includes animating the mouth region of said facial image.

11. The method as claimed in claim 9 wherein said processing includes animating the eye region of said facial image.

12. The method as claimed in claim 1 wherein said processing includes animating the head region of said facial image.

13. The method as claimed in claim 10 wherein said animating includes controllably deforming a three-dimensional wire-frame facial model corresponding to said facial image.

14. The method as claimed in claim 13 further including mapping a surface texture onto said three-dimensional wire-frame facial model.

15. A method comprising the steps of:

encoding an audio signal at the transmission side of a transmission system;
transmitting said encoded audio signal over said transmission system;
decoding said transmitted encoded audio signal at the receiving side of said transmission system;

sampling said decoded audio signal at an audio-domain sampling rate;
generating a first viseme sequence in response to said sampled audio signal at a first rate corresponding to said audio-domain sampling rate;
transforming said first viseme sequence into a second viseme sequence at a second rate according to a predetermined set of transformation criteria, said second rate corresponding to a video-domain frame rate; and
processing an image in response to said second viseme sequence.

16. The method as claimed in claim 15 further including encoding a video signal at the transmission side of said transmission system.

17. The method as claimed in claim 16 further including transmitting said encoded video signal over said transmission system.

18. The method as claimed in claim 16 further including decoding said transmitted encoded video signal.

19. The method as claimed in claim 18 further including registering a three-dimensional wire-frame model to said decoded video signal.

20. The method as claimed in claim 19 further including applying a surface texture contained in said decoded video signal to said three-dimensional wire-frame model.

21. The method as claimed in claim 15 wherein said transforming is performed at the transmission side of said transmission system.

22. An apparatus, comprising:

means for sampling an audio signal at an audio-domain sampling rate;
means for generating a first viseme sequence in response to said sampled audio signal at a first rate corresponding to said audio-domain sampling rate;
means for transforming said first viseme sequence into a second viseme sequence at a second rate corresponding to a video-domain frame rate according to a predetermined set of transformation criteria; and
means for processing an image in response to said second viseme sequence.

23. An apparatus comprising:

a viseme sequence generator for generating a first viseme sequence in response to a sampled audio signal at a first rate corresponding an audio-domain sampling rate;

a viseme sequence transformer coupled to said viseme sequence generator for transforming said first viseme sequence into a second viseme sequence at a second rate corresponding to a video-domain frame rate according to a predetermined set of transformation criteria; and

an image processor coupled to said viseme sequence transformer for processing an image in response to said second viseme sequence.

24. The apparatus as claimed in claim 23 wherein said audio-domain sampling rate is 100 samples per second.

25. The apparatus as claimed in claim 23 wherein said video-domain sampling rate is selected from the group consisting of 30 frames per second or 15 frames per second.

26. The apparatus as claimed in claim 23 wherein said transformation criteria include knowledge-based rules.

27. The apparatus as claimed in claim 26 wherein said knowledge-based rules include physiological articulation rules.

28. The method as claimed in claim 23 wherein said transformation criteria include a visual perception of said processed image.

29. The apparatus as claimed in claim 23 wherein said viseme sequence transformer includes a means for applying a weighted moving average to each viseme in said first viseme sequence.

30. The apparatus as claimed in claim 23 wherein said image is a video image.

31. The apparatus as claimed in claim 23 wherein said image includes an image of a facial region of a speaker.

32. The method as claimed in claim 31 wherein said image processor includes a means for animating the mouth region of said facial image.

33. The apparatus as claimed in claim 31 wherein said image processor includes a means for animating the eye region of said facial image.

34. The apparatus as claimed in claim 23 wherein said image processor includes a means for animating the head region of said facial image.

35. The apparatus as claimed in claim 34 wherein said image processor includes a structural deformation generator for controllably deforming a three-dimensional wire-frame facial model corresponding to said facial image.

36. The method as claimed in claim 35 wherein said image processor includes a texture mapper for mapping a surface texture onto said three-dimensional wire-frame facial model.

EP 0 710 929 A2

## FIG.1

<u>100</u>

AUDIO IN  110

VISEME
SEQUENCE
GENERATOR  120

VISEME
SEQUENCE  125

TRANSFORMATION
CRITERIA  140

145

SEQUENCE
TRANSFORMER  130

MOUTH
PARAMETERS  147

STRUCTURAL
DEFORMATION
GENERATOR  150

3-D
WIREFRAME  155

TEXTURE
STORE  165

TEXTURE
MAPPES  160

SYNTHESIZED
VIDEO IMAGE  170

VIDEO
OUT

## FIG.2

120

SPEECH WAVEFORM  110

VISEME
ACOUSTIC FEATURE
EXTRACTOR  210

215

VISEME
RECOGNIZER  220

125

V1, ... Vn
(VISEME ID SEQUENCE)

## FIG.3

SPEECH WAVEFORM → **SAMPLE & PREEMPHASIS** (310) → **BLOCK INTO FRAMES** (320) → **WINDOW FRAME** (330) → **AUTO-CORRELATION ANALYSIS** (340) → **LPC/ CEPETRAL ANALYSIS** (350) → **CEPETRAL WEIGHING** (360) → **HIGHER ORDER FEATURE ANALYSIZER** (370)

315    325    335    345    355    365

375 → ACOUSTIC FEATURE VECTOR SEQUENCE ( TO VISEME RECOGNIZER )

## FIG.4

FEATURE VECTOR SEQUENCE → **VISEME RECOGNIZER (VITARBI DECODING AND ALIGNMENT)** (410) → V1, ... Vn (VISEME ID SEQUENCE)

**VISEME'S ACOUSTIC ID MODELS (HMMs)** (420)

EP 0 710 929 A2

# FIG.5

## CONTROL POINTS AROUND MOUTH

## TABLE 1
## VISEME TABLE

| VISEME ID | COORDINATES OF FEATURE POINTS |
|-----------|-------------------------------|
| 1 | x1, y1, x2, y2, ..., x6, y6 |
| 2 | x1, y1, x2, y2, ..., x6, y6 |
| 3 | x1, y1, x2, y2, ..., x6, y6 |
| 4 | x1, y1, x2, y2, ..., x6, y6 |
| ° | ° |
| ° | ° |
| ° | ° |

# FIG.7
## WEIGHTED MOVING AVERAGE

$V_i$ VISEME IN ACOUSTIC DOMAIN,
100 SAMPLES/SEC

*FIG.6*

INITIALIZATION
c = 0.0
i = 0
j = 0
k = 0
— 610

697

i = i + 1
j = 0

INCREMENT FRAME COUNTER
c = c + 0.3
— 620

660

i = i + 1
j = j + 1

COMPUTE VIDEO FRAME NUMBER
f = trunc(c)

630

STORE VISEME INTO BUFFER
$B_j = V_i$
— 650

A NEW FRAME ?
f > k
NO

640

YES

DETERMINE VISEME IN VIDEO DOMAIN
$\widehat{V}_f = V_i$
— 670

WEIGHTED MOVING AVERAGE — 680

KNOWLEDGE BASED SMOOTHING — 690

k = f — 695

$\widehat{V}_f$ VISEME AND MOUTH PARAMETERS
IN VIDEO DOMAIN, 30 FRAMES/SEC.

## FIG.8

(a) FRONT IMAGE     (b) SIDE IMAGE

## FIG.9

## FIG.10

## FIG.11

## FIG.12

## *FIG.13*

### 1300

AUDIO IN → AUDIO ENCODER → TRANSMISSION SYSTEM → AUDIO DECODER → AUDIO OUT

1310
1320
1330
1340
1350

AUDIO DECODER → ACOUSTIC-ASSISTED IMAGE PROCESSOR → VIDEO OUT

100
1360

## *FIG.14*

### 1400

AUDIO IN → AUDIO ENCODER → TRANSMISSION SYSTEM → AUDIO DECODER → AUDIO OUT

1320
1330
1340
1350

AUDIO DECODER → ACOUSTIC-ASSISTED IMAGE PROCESSOR → VIDEO OUT

100
1360

VIDEO IN → VIDEO ENCODER → TRANSMISSION SYSTEM → VIDEO DECODER

1405
1410
1440
1420